# EUROPÄISCHE PATENTANMELDUNG

(11) **EP 3 699 705 A1**
(43) Veröffentlichungstag der Anmeldung: **26.08.2020**
(21) Anmeldenummer: 19159111.4
(22) Anmeldetag: 25.02.2019
(51) Int. Cl.: G05B 19/418, H04L 12/26, H04L 12/24

(54) **VERFAHREN ZUR ÜBERWACHUNG EINES INDUSTRIELLEN KOMMUNIKATIONSNETZWERKES, SICHERHEITS-SYSTEM, INDUSTRIELLES KOMMUNIKATIONSNETZWERK, COMPUTERPROGRAMM UND COMPUTERLESBARES MEDIUM**

(71) Anmelder: Siemens Aktiengesellschaft, 80333 München (DE)
(72) Erfinder: Busch, Dominik Michael, 82211 Herrsching (DE); Moritz, Soeren, 91353 Wimmelbach (DE)

(57) **Zusammenfassung**

Die Erfindung betrifft ein Verfahren zur Überwachung einer industriellen Anlage (2) mit einem Kommunikationsnetzwerk (1), über das zwischen Komponenten (6-8, 10,11, 15, 18-25, 27-31) der Anlage (2) Daten ausgetauscht werden, bei dem
- Daten, die in dem Kommunikationsnetzwerk (1) ausgetauscht werden bereitgestellt und/oder abgegriffen und auf das Bestehen von Anomalien ausgewertet werden,
- Wartungs-Informationen (43) über zukünftige Wartungshandlungen an der Anlage (2) bereitgestellt werden,
- bei dem Erkennen von Anomalien ein Abgleich mit den Wartungs-Informationen (43) erfolgt, wobei zwischen wartungsbedingten und nicht-wartungsbedingten Anomalien unterschieden wird, und
- für nicht wartungs-bedingte Anomalien ein Alarm (41) ausgegeben wird.

Darüber hinaus betrifft die Erfindung ein Sicherheits-System (34, 37), ein industrielles Kommunikationsnetzwerk (1), ein Computerprogramm und ein computerlesbares Medium.

## Beschreibung

Die Erfindung betrifft ein Verfahren zur Überwachung eines industriellen Kommunikationsnetzwerkes, über das zwischen Komponenten einer industriellen Anlage Daten ausgetauscht werden. Darüber hinaus betrifft die Erfindung ein Sicherheits-System für ein industrielles Kommunikationsnetzwerk, ein industrielles Kommunikationsnetzwerk, ein Computerprogramm und ein computerlesbares Medium.

Industrielle Automatisierungsnetzwerke bestehen aus Sicht der Datenverarbeitung aus einem Datennetzwerk sowie aus Datenverarbeitungsmitteln, welche zur Durchführung einer Datenkommunikation durch das Datennetzwerk miteinander verbunden sind.

Unter dem Begriff Automatisierungsnetzwerke sollen nachfolgend u.a. Automatisierungssysteme, Steuerungsanlagen, Produktionsanlagen, Fertigungsanlagen oder dergleichen verstanden werden. Die Automatisierungsgeräte, etwa Steuerungen der Automatisierungsanlage können dazu ausgebildet sein, eine Rechenaufgabe durchzuführen. Zu diesem Zweck können die Automatisierungsgeräte eine Recheneinrichtung, beispielsweise einen Prozessor (CPU), umfassen. Des Weiteren können die Automatisierungsgeräte Ein-/Ausgabeeinrichtungen aufweisen, die Prozessgrößen erfassen können und entsprechende Stellsignale ausgeben können.

IT-Technologien wie Ethernet und das Internet Protocol (IP) haben auch in den Bereich der industriellen Automatisierungstechnik Einzug gehalten. Diese Technologien bieten diverse große Vorteile, tragen jedoch auch zu erhöhten Sicherheitsrisiken bei. Es ist beispielsweise möglich, dass Automatisierungsnetzwerke, etwa um eine Bedienung einer durch das Automatisierungsnetzwerk automatisierten industriellen Anlage von einer entfernten Station zu ermöglichen, mittels eines Gateways an ein öffentliches Netzwerk, wie das Internet, angebunden sind. In einem solchen Fall besteht dann jedoch die Gefahr, dass Dritte von außen unberechtigt auf die Anlage zugreifen. Auch im Bereich der industriellen Automatisierung besteht daher Bedarf an Cyber-Security.

In dem Aufsatz "Ganzheitliches anlagenweites Security Management - Werkzeuge für die automatisierte Unterstützung", von Anna Palmin, Stefan Runde und Pierre Kobes, veröffentlicht in atp, März 2012, Seiten 34 bis 40, sind Maßnahmen zur Verbesserung der Sicherheit in industriellen Automatisierungsnetzwerken beschrieben. Eine der wesentlichen Maßnahmen im Rahmen eines ganzheitlichen Security Managements ist die Erfassung und Auswertung von Meldungen, die verschiedene Komponenten des Automatisierungsnetzwerks bei Ereignissen erzeugen und die möglicherweise einen Angriff erkennen lassen. Eine übergeordnete Einheit sammelt die Meldungen, bei denen es sich beispielsweise um sogenannte Sys-Logs handeln kann, und wertet diese aus, um aus den gemeldeten Einzelereignissen oder einer Zusammensetzung mehrere Ereignisse zu erkennen, ob ein Angriff tatsächlich stattfindet, und ggf. diesen an eine Stelle zu melden, damit geeignete Maßnahmen als Reaktion auf den erkannten Angriff eingeleitet werden können. Diese Funktionalität wird als Security Event Management (SEM) bezeichnet.

Eine weitere Funktionalität betrifft die Erzeugung von Berichten, um das Einhalten von Richtlinien nachzuweisen. Diese wird als Security Information Management (SIM) bezeichnet. Vereint eine Einheit die beiden genannten Funktionalitäten, so wird sie als Security Information und Event Management (SIEM) bezeichnet.

Ein SIEM-System wird insbesondere in der Engineering-Phase, das heißt bei der Projektierung und der Inbetriebsetzung einer automatisierungstechnischen Anlage, konfiguriert. Die Konfiguration umfasst u. a. die Anbindung von Datenverarbeitungsmittelen, welche als Quellen für Meldungen sicherheitsrelevanter Ereignisse in Frage kommen, an das SIEM-System unter Verwendung der entsprechenden Konnektoren. Das primäre Ziel eines in einer Automatisierungsanlage eingesetzten SIEM-Systems besteht in der zeitnahen Erkennung und Auswertung von Hinweisen auf Angriffsversuche oder auf Abweichungen vom Normalzustand. Durch das SIEM-System soll es ermöglicht werden, auf Angriffsversuche und Anomalien zeitnah und angemessen zu reagieren, sowie in der Langzeitspeicherung von Securityrelevanten Informationen und der Generierung von Berichten.

In der ebenfalls auf die Anmelderin zurückgehenden EP 3 122 016 A1 sind ein Automatisierungsnetzwerk mit einem SIEM-Server und ein Verfahren zur Überwachung der Sicherheit der Übertragung von Datenpaketen in einem solchen offenbart.

Von der Anmelderin ist ein als "Industrial Anomaly Detection" (IAD) bezeichnetes Anomalie-Erkennungs-System auf dem Markt (siehe insbesondere https://www.siemens.com/content/dam/webassetpool/mam/tagsiemens-com/smdb/digital-factory/industrial-securityservices/dfcs-b10159-00-iad-onepager-210x280-72dpi-1.pdf). Mit diesem lassen sich ebenfalls sicherheitsrelevante Vorfälle wie unerlaubtes Eindringen oder Schadsoftware erkennen und darauf aufbauend Gegenmaßnahmen ergreifen. Das System umfasst eine Software, die beispielsweise auf einem Industrie-PC (IPC) vorinstalliert sein kann, um sie einfach in industrielle Umgebungen zu integrieren. Auch ist es möglich, dass die Software direkt auf Netzwerkkomponenten verfügbar ist.

Ein IAD-System schafft zweckmäßiger Weise zunächst Transparenz über die in einem industriellen Netzwerk eingebundenen Geräte (zum Beispiel Steuerungen, Bediengeräte, Feldgerät, etc.) und die darauf installierte Software. Auf dieser Basis können dann Schwachstellen von am Netzwerk angeschlossenen Geräten identifiziert werden, indem die Geräte etwa auf bekannte Sicherheitslücken (Common Vulnerabilities and Exposures/CVE) untersucht werden. Zugleich können weitere, durch unsichere Konfiguration verursachte Sicherheitslücken erkannt und behoben werden. Insbesondere im Anschluss daran kann das Kommunikationsverhalten der Geräte kontinuierlich überwacht werden. Die Daten-Erfassung für die Anomalie-Überwachung kann passiv erfolgen und hat damit keinen Einfluss auf den eigentlichen Anlagenbetrieb, etwa eine Produktion.

Bei der Anomalie-Erkennung kann auch künstliche Intelligenz (AI/Artificial Intelligence) zum Einsatz kommen, damit die Konfiguration des IAD-Systems selbstlernend erfolgen kann. Dieses analysiert dann den Datenverkehr im Netzwerk bevorzugt automatisch in einer "Anlernphase", um später Anomalien, die beispielsweise auf das Eindringen oder den Datenklau durch Hacker hinweisen, zu erkennen.

In den meist ring- oder sternförmig aufgebauten Netzwerktopologie der Kommunikationsnetzwerke industrieller Anlagen verbinden Switches bzw. Bridges die Geräte. Switches bzw. Bridges bieten oftmals die Möglichkeit, den gesamten Datenverkehr zu spiegeln, zum Beispiel über einen so genannten SPAN-Port. Alternativ oder zusätzlich kann beispielsweise auch ein sogenanntes TAP-Device (Test Acces Point) zum Erheben der Daten verwendet werden. Diese gespiegelten Daten werden bevorzugt von einem oder mehreren Anomalie-Sensoren erfasst und insbesondere vorverarbeitet. Der oder die Anomalie-Sensoren können sowohl als Appliance (Hardware und Software) als auch als virtuelle Maschine ausgeprägt sein. Weiterhin können die Anomalie-Sensoren Teil eines IAD-Systems sein.

Dabei werden, insbesondere von zum Einsatz kommenden Sensoren, bevorzugt Rohdaten aufgezeichnet, die daraus Metadaten erzeugen und beide an eine zentrale Konsole (englisch: Central Console) schicken, welche Referenzdaten (Baselines) bzgl. der Metadaten enthält. Die Metadaten beinhalten Geräteinformationen insbesondere über alle im Netzwerk kommunizierenden Geräte, die Kommunikationsverbindungen, das verwendete Kommunikationsprotokoll und/oder soweit wie möglich konkrete Angaben zu Applikationsdateien (beispielsweise Datenbaustein-Ladebefehle an einer Steuerung). Besonders bevorzugt umfassen die Metadaten alle diese Informationen. Durch den Vergleich der Metadaten mit der Baseline werden bei Abweichungen von dieser Ereignisse erzeugt wie z.B.: Neues Gerät gefunden, neue Kommunikation gefunden, externes Gateway gefunden, PLC-Programm Upload/Download, Gerät verschwunden/reagiert nicht auf Anfragen, Restart CPU, Stop/Start/Init CPU, Login Bestätigung, Config download von einem Netzwerkgerät.

Bei einem oder mehreren Ereignissen (Events) löst die zentrale Konsole einen Alarm aus, welcher beispielsweise aus einer E-Mail, SMS oder anderen Benachrichtigung für Anwender besteht.

Je nachdem, wie kritisch die Events sind, können sie von Experten vor Ort oder externen Security-Spezialisten gemanagt werden.

Das Problem ist, dass auch bei Wartungsarbeiten Alarme ausgelöst werden können bzw. werden, obwohl Abweichungen von den Referenzwerten in diesem Fall gewöhnlich und unkritisch sind, insbesondere nicht bedeuten, dass ein Cyber-Angriff oder dergleichen vorliegt. Nach Kenntnisstand der Anmelderin können in diesem Fall bis zu 80% der Alarme False-Positives sein.

Der Erfindung liegt ausgehend davon die Aufgabe zugrunde, ein Verfahren der eingangs genannten Art anzugeben, welches die Qualität und/oder Zuverlässigkeit der Erkennung von Hinweisen auf Angriffsversuche oder auf Abweichungen vom Normalzustand in einem Automatisierungsnetzwerk verbessert. Darüber hinaus ist es Aufgabe der Erfindung, eine Einrichtung zur Durchführung eines solchen Verfahrens anzugeben.

Die erstgenannte Aufgabe wird gelöst durch ein Verfahren zur Überwachung einer industriellen Anlage mit einem Kommunikationsnetzwerk, über das zwischen Komponenten der Anlage Daten ausgetauscht werden, bei dem
- Daten, die in dem Kommunikationsnetzwerk ausgetauscht werden, bereitgestellt und/oder abgegriffen und auf das Bestehen von Anomalien ausgewertet werden,
- Wartungs-Informationen über zukünftige Wartungshandlungen an der Anlage bereitgestellt werden,
- bei dem Erkennen von Anomalien ein Abgleich mit den Wartungs-Informationen erfolgt, wobei zwischen wartungsbedingten und nicht-wartungsbedingten Anomalien unterschieden wird, und
- für nicht wartungs-bedingte Anomalien ein Alarm ausgegeben wird.

Die zweitgenannte Aufgabe wird gelöst durch ein Sicherheits-System für ein industrielles Kommunikationsnetzwerk zur Durchführung des erfindungsgemäßen Verfahrens, umfassend
- eine Empfangseinheit, die dazu ausgebildet und/oder eingerichtet ist Daten, die in einem industriellen Kommunikationsnetzwerk übertragen werden, abzugreifen oder übergeben zu bekommen, und
- ein Anomalie-Erkennungs-Einheit, die dazu ausgebildet und/oder eingerichtet ist, die Daten auf das Bestehen von Anomalien auszuwerten,
wobei das Sicherheits-System dazu ausbildet und/oder eingerichtet ist, Wartungs-Informationen über zukünftige Wartungshandlungen an der Anlage abzugreifen oder übergeben zu bekommen, und für den Fall, dass von der Anomalie-Erkennungs-Einheit eine Anomalie erkannt wurde, einen Abgleich mit den Wartungs-Informationen durchzuführen, und um zwischen wartungsbedingten und nicht-wartungsbedingten Anomalien zu unterscheiden, und um für nicht wartungs-bedingte Anomalien einen Alarm auszugeben.

Der Kern der vorliegenden Erfindung besteht mit anderen Worten darin, die Zuverlässigkeit der Überwachung eines Kommunikationsnetzwerkes einer industriellen Anlage zu verbessern, indem für den Fall, dass eine Anomalie in dem Kommunikationsnetzwerk erkannt wird, zunächst eine Überprüfung stattfindet, ob diese durch planmäßig vorgesehen Wartungsarbeiten bedingt wurde und somit nicht kritisch ist, insbesondere nicht auf einen Angriff zurückgeht, und in einem solchen Fall einen bei der beobachteten Datenlage an sich gemäß dem Stand vorgesehenen Benutzeralarm nicht auszugeben. Alarme erfolgen vielmehr nur für bzw. bei nicht wartungsbedingten Anomalien.

Um die Unterscheidung treffen zu können, werden Informationen über geplante, zukünftige Wartungshandlungen bereitgestellt bzw. beschafft und diese bevorzugt jedes Mal, wenn eine Anomalie beobachtet wird, herangezogen und evaluiert, ob diese die Anomalie bedingt haben.

Auftretende Anomalien bzw. Anomalie-Ereignisse können beispielsweise sein:
- Neue Netzwerkteilnehmer,
- Neue Netzwerkverbindungen,
- Ein Kommunikationsausfall auf wenigstens einer Kommunikationsverbindung,
- Eine Kommunikationsanstieg auf wenigstens einer Kommunikationsverbindung,
- Fehlerhafte Datenpakete,
- Unbekannte, beispielsweise neue und/oder veränderte bzw. manipulierte Datenpakete,
- Neue Protokolltypen,
- Netzwerkprobleme, beispielsweise Engpässe hinsichtlich der Netzwerkkapazität,
- Durch Malware bedingte Kommunikation,
- Angriffe,
- ...

Unter Wartungshandlungen sind auch sämtliche (geplante) Änderungen der Anlage bedingende Handlungen zu verstehen. Beispielsweise fallen unter Wartungshandlungen etwa auch ein Software- und/oder Hardware-Update und/oder eine Konfigurationsänderung wenigstens einer Komponente einer Anlage und/oder ein Umbau wenigstens einer Komponente einer Anlage und/oder eine Erweiterung wenigstens einer Komponente einer Anlage und/oder ein Austausch wenigstens einer Komponente und/oder Kommunikationsverbindung einer Anlage.

Es ist möglich, dass Informationen über sämtliche Arten geplanter Wartungsarbeiten an bzw. in einer gegebenen Anlage bereitgestellt werden. Insbesondere für den Fall, das bekannt ist, dass einige Arten von Wartungsarbeiten die im Kommunikationsnetzwerk ausgetauschten Daten derart beeinflussen können, dass eine Anomalie erkannt wird, andere Arten von Wartungshandlungen jedoch nicht, kann es ausreichen, Informationen nur über die zweitgenannte Art bereitzustellen.

Das Abgreifen und/oder Bereitstellen von in dem Kommunikationsnetzwerk ausgetauschten Daten für das Erkennen von Anomalien erfolgt bevorzugt mittels TCP/IP (Transmission Control Protocol/Internet Protocol). Beispielsweise können Daten mittels TCP/IP an ein Sicherheitsinformations- und/oder Ereignis Management System (SEM, SIM oder SIEM), welches eine Anlage umfasst bzw. welches einer solchen zugeordnet ist, bereitgestellt werden, wie aus dem Stand der Technik an sich vorbekannt.

Die Datenbereitstellung bzw. das Abgreifen von Daten kann alternativ oder zusätzlich auch gemäß dem Syslog-Standard für SIEM-Events insbesondere über UDP (User Datagram Protocol) erfolgen.

Ein Sicherheitsinformations- und/oder Ereignis Management System kann Ereignisse (Events) beispielsweise über XML und/oder JSON erfassen.

Insbesondere, damit der Stand über die geplanten Wartungsarbeiten aktuell ist und bleibt, werden bevorzugt mehrfach Wartungs-Informationen bereitgestellt. Die Bereitstellung kann in besonders bevorzugter Ausgestaltung periodisch und/oder jeweils in Reaktion auf eines oder mehrere vorgegebene Ereignisse erfolgen.

Als besonders geeignet hat es sich erwiesen, wenn die Wartungs-Informationen über ein Änderungs-Management-System bereitgestellt werden. Für Änderungs-Management-Systeme wird oftmals auch die englische Bezeichnung Change Management System (CMS) verwendet. Solche Systeme sind häufig ohnehin in Anlagen vorhanden bzw. solchen bereits zugeordnet, um den Service zu managen. Über ein solches System können dann die Wartungs-Informationen, auf die erfindungsgemäß zurückgegriffen wird, zur Verfügung gestellt werden.

Das erfindungsgemäße Sicherheits-System weist in bevorzugter Ausgestaltung eine Kommunikationsschnittstelle zur Verbindung mit einem Änderungs-Management-System auf.

Weiterhin kann vorgesehen sein, dass die Wartungs-Informationen in einer Datenbank und/oder einer Datei und/oder in einem webbasierten System bereitgestellt werden. Ein webbasiertes System weist dann bevorzugt eine entsprechende Programmierschnittstelle, häufig kurz als API (Application Programming Interface) auf. Wie bzw. wo die Wartungs-Informationen bereitgestellt werden, kann insbesondere von einem Änderungs-Management-System (CMS) abhängen, über welches bzw. mit Hilfe dessen die Bereitstellung erfolgt.

Als besonders zweckmäßig hat sich erwiesen, wenn die Wartungs-Informationen die Angabe zukünftiger Wartungshandlungen, die das Kommunikationsnetzwerk und/oder daran teilnehmenden Netzwerkkomponenten betreffen, umfassen.

Weiterhin bevorzugt ist vorgesehen, dass die Wartungs-Informationen für geplante Wartungshandlungen jeweils umfassen: einen zugehörigen Kalendertag und insbesondere eine zugehörige Uhrzeit, und/oder Angaben darüber, von welcher oder welchen Personen die jeweilige Wartungshandlung ausgeführt wird, und/oder ein Segment des Kommunikationsnetzwerkes, in dem die jeweilige Wartungshandlung erfolgen wird und/oder davon betroffene Komponenten liegen, und/oder die Art der jeweiligen Wartungshandlung und/oder Angaben über eine im Rahmen der jeweiligen Wartungshandlung stattfindenden Konfigurationsänderung von einer oder mehreren betroffenen Komponenten, und/oder Angaben zu einem im Rahmen der jeweiligen Wartungshandlung stattfindenden Softwareupdate umfassen. Diese Angaben haben sich als besonders geeignete Basis für die Entscheidung erwiesen, ob eine beobachtete Anomalie wartungsbedingt ist oder nicht.

In weiterer Ausgestaltung der Erfindung ist ferner vorgesehen, das die Auswertung der Daten auf das Bestehen einer Anomalie umfasst, dass die Daten mit vorgegebenen Schwellwerten und/oder Kennlinien verglichen werden und bei einer Abweichung von einem oder mehreren Schwellwerten und/oder von einer oder mehreren Kennlinien wenigstens ein Ereignis erzeugt wird, wobei die Ausgabe von Alarmen bevorzugt von der Erzeugung von Ereignissen abhängt.

Das Absetzen von Alarmen erfolgt besonders bevorzugt gewichtet in Abhängigkeit davon, ob die Wartung das Erzeugen eines Ereignisses/Events vorsieht.

Weiterhin bevorzugt werden - etwa mit einem oder mehreren geeigneten Sensoren einer Anomalie-Erkennungs-Einheit - aus dem Kommunikationsnetzwerk stammende Daten, insbesondere Rohdaten erfasst bzw. aufgezeichnet und daraus Metadaten erzeugt. Die Metadaten enthalten besonders bevorzugt Geräteinformationen über einen Teil oder auch alle Industrie- bzw. Netzwerkgeräte des Kommunikationsnetzwerkes und die Kommunikationsverbindungen zwischen diesen. Es kann dann ein Vergleich insbesondere der Daten, insbesondere Metadaten mit Schwellwerten und/oder Kennlinien erfolgen und bei Abweichung insbesondere vorgegebenen Ausmaßes von diesen wird zweckmäßiger Weise ein Anomalie-Ereignis erzeugt, etwa neues Gerät gefunden, neue Kommunikation gefunden, externes Gateway gefunden, PLC-Programm Upload/Download, Gerät verschwunden/reagiert nicht auf Anfragen, Restart einer CPU, Stop/Start/Init einer CPU, Login Bestätigung, Konfigurations-Download von einem Netzwerkgerät. Bei einem oder mehreren solcher Ereignisse wird eine Anomalie erkannt bzw. registriert und es wird - sofern der Abgleich mit den Wartungsinformationen ergibt, dass die Anomalie nicht auf eine oder mehrere Wartungshandlungen zurückzuführen ist, ein Alarm ausgegeben.

Ein Alarm kann beispielsweise in Form einer E-Mail, einer SMS oder auch einer anderen Art der Benachrichtigung an einen Benutzer bzw. Betreiber der Anlage erfolgen.

Der Abgleich mit den Wartungs-Informationen schließt bevorzugt den Abgleich erzeugter Ereignisse ein, wobei insbesondere für das oder die jeweiligen Ereignisse geprüft wird, ob wenigstens eine insbesondere zeitgleich mit dem oder den jeweiligen Ereignissen stattfindende oder stattgefundene Wartungshandlung ein solches Ereignis vorsieht oder vorgesehen hat.

Bevorzugt erfolgt die Entscheidung, ob eine Anomalie wartungsbedingt war, anhand eines oder mehrere Elemente der Wartungs-Informationen, insbesondere der Zeit von geplanten Wartungshandlungen getroffen.

Weiterhin kann vorgesehen sein, dass die Auswertung der Daten auf das Bestehen von Anomalien unter Verwendung eines Regelwerkes erfolgt. Das Regelwerk wird dann bevorzugt in Abhängigkeit der Wartungs-Informationen verändert.

Rein beispielhaft sei genannt, dass als Regelwerk hinterlegt ist, dass bestimmte Ereignisse und/oder Ereignisfolgen und/oder Zeitpunkte von Ereignissen einen Alarm auslösen. In einem Regelwerk kann auch vorgesehen sein, dass basierend auf Korrelationsregeln zwischen Ereignissen (beispielweise bei mehrfachem Auftreten von Ereignissen und/oder weiteren Nebenbedingungen/Kriterien, wie etwa Zeitpunkt) ein Alarm ausgegeben wird. Die Verwendung von Regelwerken für die Anomalie-Erkennung ist aus dem Stand der Technik an sich vorbekannt, etwa von SEM-, SIM- bzw. SIEM-Systemen. Gemäß der vorliegenden Erfindung kann, um die Ausgabe wartungsbedingter Alarme zu vermeiden vorgesehen sein, dass ein Regelwerk, wie es gemäß dem Stand der Technik vorgesehen ist, angepasst wird, und/oder bestimmte, konkret wartungsbedingte Ereignisse an ein solches gar nicht erst weitergegeben werden (Filterfunktion) .

Das erfindungsgemäße System umfasst bevorzugt ein Sicherheitsinformations- und/oder Ereignis Management System oder ist durch ein solches gegeben. Alternativ oder zusätzlich kann es ein IAD-System (Industrial Anomaly Detection) umfassen oder durch ein solches gegeben sein. Besonders bevorzugt umfasst es sowohl ein Sicherheitsinformations- und/oder Ereignis Management System als auch ein IAD-System. Es kann auch durch eine Kombination dieser beiden Arten von Systemen gebildet sein.

Der Abgleich mit den Wartungs-Informationen kann in bzw. mittels der Anomalie-Erkennungs-Einheit des erfindungsgemäßen Systems erfolgen. Wenn das erfindungsgemäße Sicherheits-System ein SEM- oder SIM- oder SIEM-System umfasst, kann der Abgleich mit den Wartungs-Informationen durch dieses erfolgen. Das SEM- oder SIM- oder SIEM-System ist dann entsprechend ausgebildet und/oder eingerichtet. Umfasst das erfindungsgemäße Sicherheits-System ein IAD-System, kann alternativ oder zusätzlich vorgesehen sein, dass dieses dazu ausgebildet und/oder eingerichtet ist, einen Abgleich mit den Wartungs-Informationen durchzuführen.

Ein Sicherheitsinformations- und/oder Ereignis Management (Security Information and/or Event Management, SEM oder SIM oder SIEM) kann ein Computerprogramm für die Realisierung entsprechender Sicherheitsfunktionen umfassen oder durch ein solches gegeben sein. Rein beispielhaft für ein am Markt erhältliches SIEM-Programm sei der McAfee Enterprise Security Manager genannt.

Als Beispiel für ein SIEM-Lösung in Form eines separaten Gerätes sei eine sogenannte SIEM Combo 500 genannt. Hierbei handelt es sich um einen Industrie-PC, auf welchem die genannte McAfee Software installiert ist und der für 500 Ereignisse pro Sekunde ausgelegt ist.

Ein SEM- bzw. SIM- bzw. SIEM-System, welches derart erweitert ist, dass der erfindungsgemäß vorgesehene Abgleich mit den Wartungs-Informationen erfolgen kann, um unkritische Ereignisse herausfiltern zu können, stellt ein Ausführungsbeispiel eines erfindungsgemäßen Systems dar. Alternativ oder zusätzlich kann das erfindungsgemäße System auch ein IAD-System umfassen, welches derart erweitert ist, dass der erfindungsgemäß vorgesehene Abgleich mit den Wartungs-Informationen erfolgen kann.

Der zum Einsatz kommende Filter kann beispielsweise einen Teil eines SIM- oder SEM- oder SIEM-Systems und/oder einen Teil eines IAD-Systems bilden, welches Teil des erfindungsgemäßen Systems ist.

Ein weiterer Gegenstand der Erfindung ist ein industrielles Kommunikationsnetzwerk, das ein erfindungsgemäßes Sicherheits-System umfasst oder mit einem solchen verbunden ist. Das Sicherheits-System ist dann bevorzugt mit einem Netzwercknoten des Kommunikationsnetzwerkes, insbesondere mit einem Spiegel-Port eines solchen, und/oder mit einem Test-Zugriffs-Punkt des Kommunikationsnetzwerkes verbunden.

Ein Spiegel-Port kann beispielsweise in Form eines SPAN-Ports gegeben sein. Für einen Test-Zugriffs-Punkt wird auch oftmals die englische Bezeichnung "Test Access Point" oder die zugehörige Abkürzung TAP verwendet.

Ein weiterer Gegenstand der Erfindung ist ein Computerprogramm, das Programmcodemittel zur Durchführung der Schritte des erfindungsgemäßen Verfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin zeigt jeweils in rein schematischer Darstellung
- FIG 1: ein industrielles Kommunikationsnetzwerkes einer Automatisierungsanlage und ein erstes Ausführungsbeispiel eines erfindungsgemäßen Sicherheits-Systems, das mit diesem verbunden ist, und
- FIG 2: das Kommunikationsnetzwerk aus Figur 1 und ein zweites Ausführungsbeispiel eines erfindungsgemäßen Sicherheits-Systems, das mit diesem verbunden ist.

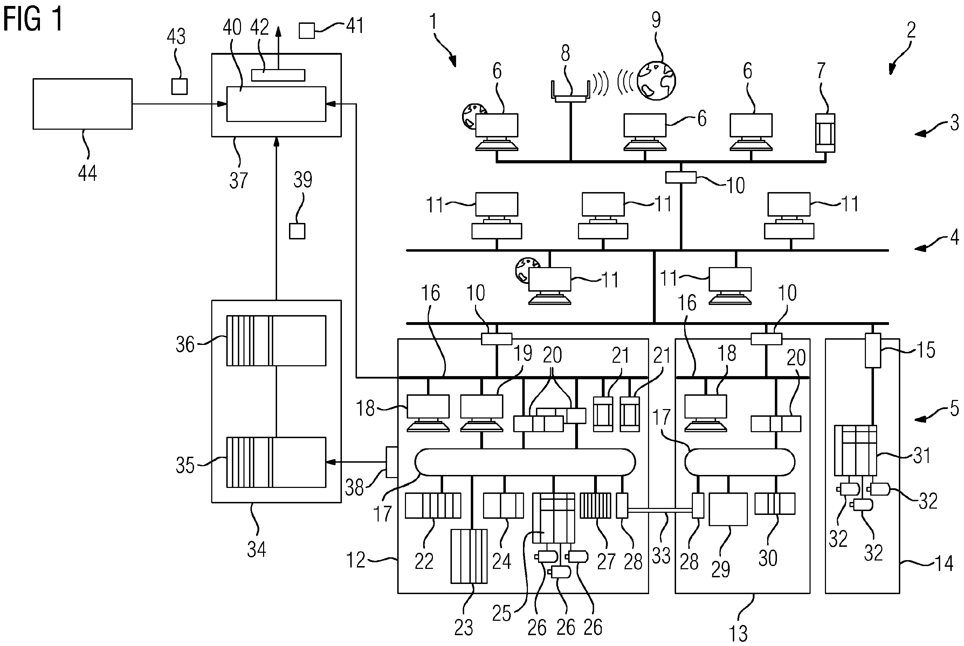

Die FIG 1 zeigt in rein schematischer Darstellung ein Kommunikationsnetzwerk 1 einer in der Figur nicht weiter dargestellten industriellen Automatisierungsanlage 2.

Das dargestellte Kommunikationsnetzwerk ist in mehrere Ebenen 3-5, konkret eine "Büro"-Ebene 3, eine DMZ-Netzwerk-Ebene 4 (DMZ steht dabei für "demilitarisierte Zone) und eine Produktionsnetzwerk-Ebene 5. Auf der Büro-Ebene 3 ist in an sich bekannter Weise eine Mehrzahl von PCs 6, von denen ein PC 6 einen Web-Client umfasst, und ein Domain-Controller 7 angeschlossen. Auf der Büro-Ebene 3 ist ferner ein Gateway 8 zur Verbindung mit dem Internet 9 vorgesehen.

Auf der DMZ-Ebene 4, die über eine Firewall 10 mit der Büro-Ebene 3 verbunden ist, befinden sich mehrere Server 11.
Auf der Büro- 3 und die DMZ-Ebene 4 ist das Netzwerk 1 ein Ethernet-basiertes Office-LAN.

Die Ebene 5 umfasst drei Netzwerkzonen 12-14, die jeweils über mehrere Netzwerkkomponenten ein Produktionsnetz aufspannen und somit die Kommunikation zwischen den eingesetzten Automatisierungskomponenten ermöglichen, und die jeweils über eine Firewall 10 bzw. eine Firewall 15 mit der DMZ-Ebene 4 verbunden sind. Die Produktionsnetzwerke 12 und 13 umfassen jeweils einen Terminalbus 16, an dem OS-Clients 18, eine Engineering-Station 19 sowie speicherprogrammierbare Steuerungen (SPS) 20 und 21 anliegen, und einen Anlagenbus 17.

An dem Anlagenbus 17 der Produktionsnetze bzw. Zonen 12 und 13 liegen u.a. Steuerungen und Feldgeräte an. Konkret sind speicherprogrammierbare Steuerungen 22 bis 24, eine Motorsteuerung mit integrierten Umrichtern 25, ein Elektromotor 26 eine weitere SPS 27, eine Firewall 28 und zwei weitere Steuerungen (SPS) 29, 30 vorhanden. An dem Produktionsnetz 14 liegen eine weitere Motorsteuerung mit integrierten Umrichtern 31 sowie weitere Elektromotoren 32 an.

Zwischen den beiden Anlagenbussen 17 der Netze bzw. Zonen 12 und 13 ist ferner ein VPN-Tunnel 33 eingerichtet.

Es sei angemerkt, dass der Aufbau und die Komponenten des Kommunikationsnetzwerkes 1 rein beispielhaft zu verstehen sind und sich ein solches selbstverständlich auch durch eine andere Struktur und/oder andere Komponenten auszeichnen kann.

Zwischen den Teilnehmern 6-8, 10,11, 15, 18-25, 27-31 des Kommunikationsnetzwerkes 1 der Anlage 2 werden Daten ausgetauscht. Der Datenaustauscht schließt einerseits den Austausch von Messwerten bzw. Stellwerten zwischen Steuerungen und Feldgeräten (insbesondere auf Produktionsebene 5) ein, wie es in an sich bekannter Weise erforderlich ist, um einen in einer Anlage 2 ablaufenden Prozess überwachen und auf diesen einwirken zu können. Darüber hinaus tauschen die Teilnehmer 6-8, 10,11, 15, 18-25, 27-31 Daten, etwa in Form von Meldungen aus, die Geräteinformationen der Teilnehmer sowie Informationen über die Kommunikationsverbindungen zwischen diesen betreffen. Letzteres ist auch aus dem klassischen, von der Automatisierungstechnik unabhängigen IT-Bereich vorbekannt.

Die Anbindung an das Internet 9 bietet den Vorteil, dass eine Bedienung der durch das Automatisierungsnetzwerk 1 automatisierten industriellen Anlage 2 von einer entfernten Station möglich ist. Dem steht jedoch die Gefahr gegenüber, dass Dritte von außen unberechtigt auf die Anlage 2 zugreifen.

Auch im Bereich der industriellen Automatisierung besteht daher Bedarf an Cyber-Security. Hierfür ist es bekannt, die Kommunikationsnetzwerke auf Anomalien zu überwachen.

Eine der wesentlichen Maßnahmen im Rahmen eines ganzheitlichen Security Managements ist die Erfassung und Auswertung von den Daten, etwa in Form von Meldungen, die die verschiedene Komponenten 6-8, 10,11, 15, 18-25, 27-31 des Automatisierungsnetzwerks 1 bei Ereignissen erzeugen und die möglicherweise einen Angriff erkennen lassen. Eine übergeordnete Einheit sammelt diese Daten, bei denen es sich beispielsweise um sogenannte Sys-Logs handeln kann, und wertet diese aus, um aus den gemeldeten Einzelereignissen oder einer Zusammensetzung mehrere Ereignisse zu erkennen, ob eine Anomalie vorliegt, etwa tatsächlich ein Angriff stattfindet, und ggf. diesen an eine Stelle zu melden, damit geeignete Maßnahmen als Reaktion auf den erkannten Angriff eingeleitet werden können. Diese Funktionalität wird als Security Event Management (SEM) bezeichnet. Eine weitere Funktionalität betrifft die Erzeugung von Berichten, um das Einhalten von Richtlinien nachzuweisen. Diese wird als Security Information Management (SIM) bezeichnet. Vereint eine Einheit die beiden genannten Funktionalitäten, so wird sie als Security Information und Event Management (SIEM) bezeichnet.

Vorliegend ist das Kommunikationsnetzwerk 1 mit einem ein IAD-System 34 mit einem Sensor 35 und einer zentralen Konsole 36 und mit einem SIEM-System 37, vorliegend in Form einer SIEM Combo 500, verbunden, damit Anomalien erkannt und gemeldet werden können. Bei dem IAD-System handelt es sich um das "Industrial Anomaly Detection" (IAD) bezeichnete Anomalie-Erkennungs-System aus dem Hause der Anmelderin (siehe https://www.siemens.com/content/dam/webassetpool/mam/tagsiemens-com/smdb/digital-factory/industrial-security-services/dfcs-b10159-00-iad-onepager-210x280-72dpi-1.pdf). Das SIEM-System 37 ist bei dem hier beschriebenen Ausführungsbeispiel durch einen Industrie-PC gegeben, auf dem ein entsprechendes Programm installiert ist, konkret ein unter der Bezeichnung McAfee Enterprise Security Manager bekanntes Programm.

Das IAD-System 34 und das SIEM-System 37 sind beide Bestandteile eines Ausführungsbeispiels eines erfindungsgemäßen Sicherheits-Systems bzw. bilden vorliegend gemeinsam ein Ausführungsbeispiel eines solchen.

Das IAD-System 34 ist an einem Spiegel-Port eines Switches 38 angeschlossen, so dass es den Datenverkehr des Kommunikationsnetzwerkes 1, insbesondere die zwischen Netzwerkteilnehmern 6-8, 10,11, 15, 18-25, 27-31 ausgetauschten Daten "mithören" kann.

Das SIEM-System 37 ist direkt an das Kommunikationsnetzwerk 1 angeschlossen, um z.B. Syslog-Nachrichten zu empfangen. Es sei angemerkt, dass Syslog hierbei nur ein beispielhaftes Format für Security-relevante Informationen darstellt.

Der Sensor 35 stellt eine Empfangseinheit dar, welche dazu ausgebildet und eingerichtet ist, Daten, die in dem industriellen Kommunikationsnetzwerk 1 übertragen werden, abzugreifen. Von dem Sensor 35 werden konkret Rohdaten aufgezeichnet, also Daten, die in dem Kommunikationsnetzwerk 1 ausgetauscht werden, abgegriffen. Die Daten werden auf das Bestehen von Anomalien ausgewertet und für den Fall, dass das Bestehen einer Anomalie erkannt wird, wird ein Alarm ausgegeben. Die Auswertung der Daten auf das Bestehen von Anomalien umfasst, dass die Daten von der zentralen Konsole 36 mit vorgegebenen Schwellwerten und/oder Kennlinien verglichen werden und bei einer Abweichung von einem oder mehreren Schwellwerten und/oder von einer oder mehreren Kennlinien wenigstens ein Ereignis erzeugt wird, wobei die Ausgabe von Alarmen bevorzugt von der Erzeugung von Ereignissen abhängt.

Konkret werden vorliegend aus den Rohdaten Metadaten erzeugt und diese werden zusammen mit den Rohdaten an die zentrale Konsole 36, welche eine Anomalie-Erkennungs-Einheit des erfindungsgemäßen Sicherheits-Systems darstellt, und welche Referenzdaten (Baselines) bzgl. der Metadaten enthält, geschickt. Die Metadaten beinhalten Geräteinformationen insbesondere über alle im Netzwerk kommunizierenden Geräte, die Kommunikationsverbindungen, das verwendete Kommunikationsprotokoll und soweit wie möglich konkrete Angaben zu Applikationsdateien (beispielsweise Datenbaustein-Ladebefehle an einer Steuerung). Durch den Vergleich der Metadaten mit der Baseline werden bei Abweichungen von dieser Ereignisse erzeugt wie z.B.: Neues Gerät gefunden, neue Kommunikation gefunden, externes Gateway gefunden, PLC-Programm Upload/Download, Gerät verschwunden/reagiert nicht auf Anfragen, Restart CPU, Stop/Start/Init CPU, Login Bestätigung, Config download von einem Netzwerkgerät.

Bei der Anomalie-Erkennung kann auch künstliche Intelligenz (AI/Artificial Intelligence) zum Einsatz kommen, damit die Konfiguration selbstlernend erfolgen kann. Dann erfolgt eine Analyse des Datenverkehrs im Netzwerk 1 automatisch in einer "Anlernphase", um später Anomalien, die beispielsweise auf das Eindringen oder den Datenklau durch Hacker hinweisen, zu erkennen.

Wir eine Anomalie von dem IAD-System 34, konkret der zentralen Konsole 36 dieses erkannt, wird dies dem SIEM-System 35 über eine entsprechende Nachricht 39 gemeldet.

Das SIEM-System 37 umfasst ein Regelwerk 40, in dem hinterlegt ist, dass bestimmte Ereignisse und/oder Ereignisfolgen und/oder Zeitpunkte von Ereignissen einen Alarm 41 auslösen. In dem Regelwerk 40 kann auch vorgesehen sein, dass basierend auf Korrelationsregeln zwischen Ereignissen (beispielweise bei mehrfachem Auftreten von Ereignissen und/oder weiteren Nebenbedingungen/Kriterien, wie etwa Zeitpunkt) ein Alarm 41 ausgegeben wird.

Ein Alarm 41 kann beispielsweise aus einer E-Mail, SMS oder anderen Benachrichtigung für Anwender bestehen. Je nachdem, wie kritisch die Events sind, können sie von Experten vor Ort oder externen Security-Spezialisten gemanagt werden. Die Ausgabe eines Alarms erfolgt durch eine Alarm-Einheit 42, welche das SIEM-System 37 zu diesem Zwecke umfasst.

Das Problem ist, dass auch bei Wartungsarbeiten Alarme 41 ausgelöst werden können bzw. werden, obwohl Abweichungen von den Referenzwerten in diesem Fall gewöhnlich und unkritisch sind, insbesondere nicht bedeuten, dass ein Cyber-Angriff oder dergleichen vorliegt. Nach Kenntnisstand der Anmelderin können in diesem Fall bis zu 80% der Alarme 41 False-Positives sein.

Dieser Problematik wird erfindungsgemäß damit begegnet, dass Wartungs-Informationen 43 über zukünftige Wartungshandlungen an der Anlage 2 bereitgestellt werden, für den Fall, dass eine Anomalie erkannt wird ein Abgleich mit den Wartungs-Informationen 43 erfolgt, wobei zwischen wartungsbedingten und nicht-wartungsbedingten Anomalien unterschieden wird, und nur für den Fall, dass die erkannte Anomalie nicht wartungs-bedingt ist, einen Alarm 41 auszugeben. Für wartungsbedingte Anomalien hingegen werden keine Alarme ausgeben bzw. Alarme, die gemäß dem Stand der Technik vorgesehen wären, unterdrückt.

Im Ergebnis werden wartungsbedingte Fehlalarme zuverlässig vermieden.

Im Rahmen des hier beschriebenen Ausführungsbeispiels werden die Wartungs-Informationen 43 über ein Änderungs-Management-System (CMS) 44 bereitgestellt, das mit dem SIEM-System 37 verbunden ist. Das SIEM-System 37 hat dafür eine entsprechende Kommunikationsschnittstelle. Je nachdem, wie das CMS 44 ausgebildet ist, kann die Quelle für die Wartungs-Informationen 43 Datenbank, eine Datei (Flatfile) oder ein webbasiertes System mit entsprechende API sein. Vorliegend umfasst das CMS 44 eine Datenbank, in welcher Wartungs-Informationen 43 gespeichert sind. Diese können, insbesondere von einem Betreiber der Anlage, stets aktuell gehalten werden.

Aus der Datenbank des CMS 44 werden periodisch und/oder ereignisgesteuert Wartungs-Informationen 43 an das SIEM-System 37 übergeben, damit diese immer in aktueller Fassung vorliegen. Es kann jeweils eine Anfrage seitens des SIEM-Systems 37 an das CMS 44 erfolgen, um aktuelle/aktualisierte Wartungs-Informationen 43 zu erhalten.

Die Wartungs-Informationen 43 umfassen die Angabe zukünftiger Wartungshandlungen, die das Kommunikationsnetzwerk 1 und die daran teilnehmenden Netzwerkkomponenten betreffen.

Die Wartungs-Informationen 43 umfassen für geplante Wartungshandlungen jeweils einen zugehörigen Kalendertag und eine zugehörige Uhrzeit, und/oder Angaben darüber, von welcher oder welchen Personen die jeweilige Wartungshandlung ausgeführt wird, und/oder ein Segment des Kommunikationsnetzwerkes 1, in dem die jeweilige Wartungshandlung erfolgen wird und/oder davon betroffene Komponenten liegen, und/oder die Art der jeweiligen Wartungshandlung und/oder Angaben über eine im Rahmen der jeweiligen Wartungshandlung stattfindenden Konfigurationsänderung von einer oder mehreren betroffenen Komponenten, und/oder Angaben zu einem im Rahmen der jeweiligen Wartungshandlung stattfindenden Softwareupdate umfassen. Die Wartungs-Informationen 43 können auch Informationen über bzw. Angaben zu sich regelmäßig wiederholenden Wartungshandlungen umfassen, beispielsweise, dass jeden zweiten Dienstag von 9:00 - 10:00 Uhr bestimmte Wartungshandlungen stattfinden.

Der Abgleich der aus dem Kommunikationsnetzwerk 1 abgegriffenen Daten mit den Wartungs-Informationen 43 schließt den Abgleich erzeugter Ereignisse ein, wobei insbesondere für das oder die jeweiligen Ereignisse geprüft wird, ob wenigstens eine insbesondere zeitgleich mit dem oder den jeweiligen Ereignissen stattfindende oder stattgefundene Wartungshandlung ein solches Ereignis vorsieht oder vorgesehen hat.

Dabei wird das Regelwerk 40 in Abhängigkeit der Wartungs-Informationen 43 verändert. Insbesondere erfolgt das Absetzen eines Alarms 41 durch das SIEM-System 37 gewichtet in Abhängigkeit davon, ob eine (oder mehrere) geplante Wartungshandlung(en) das Erzeugen eines Events vorgesehen haben. Die Regeln des Regelwerkes 37 werden auf False-Positives bewertet, insbesondere gewichtet. Wenn eine Wartungshandlung vorgesehen war oder mehrere Wartungshandlungen vorgesehen waren, wird die Gewichtung angepasst.

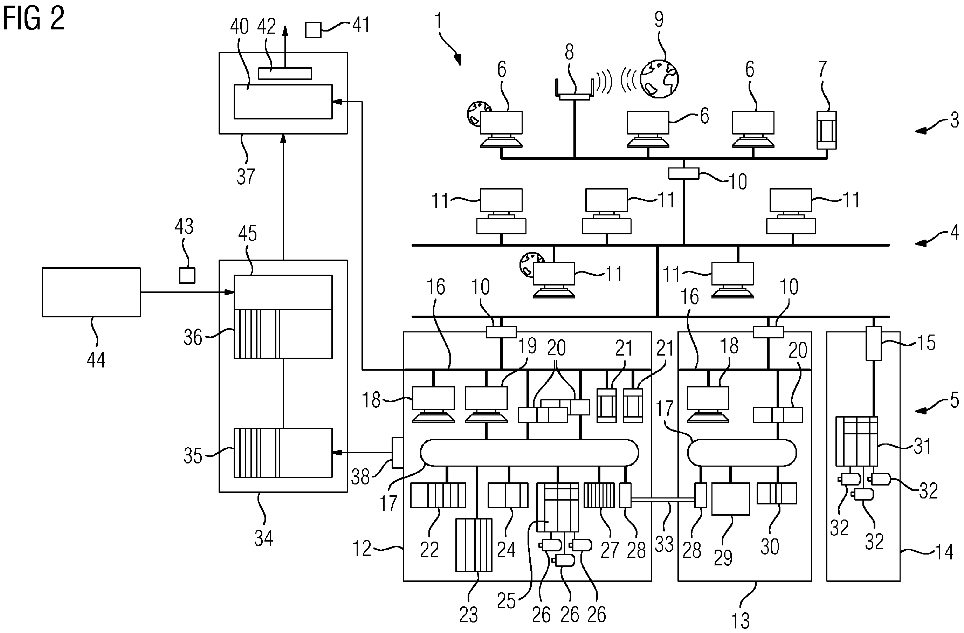

Die Figur 2 das Kommunikationsnetzwerk aus Figur 1, das mit einem zweiten Ausführungsbeispiel eines erfindungsgemäßen Sicherheits-Systems verbunden ist. Gleiche Komponenten sind darin mit gleichen Bezugszeichen versehen.

Das Sicherheits-System gemäß Figur 2 umfasst ebenfalls ein IAD-System 34 und ein SIEM-System 37. Der einzige Unterschied zu demjenigen aus Figur 1 besteht darin, dass nicht das SIEM-System 37 sondern das IAD-System 34 mit dem CMS 44 verbunden ist und von diesem die Wartungs-Informationen 43 erhält. Dafür weist das IAD-System 34 eine geeignete Kommunikationsschnittstelle und fordert periodisch und/oder ereignisgesteuert die Wartungs-Informationen an. Das IAD-System 34 umfasst hier ferner ebenfalls ein Regelwerk 45 und dieses wird - anstelle des Regelwerkes 40 des SIEM-Systems 37 in Abhängigkeit der Wartungs-Informationen 43 geändert. Konkret derart, dass nur solche Ereignisse (Events) an das SIEM-System weitergegeben werden, die nicht wartungsbedingt sind.

Das in Abhängigkeit der Wartungs-Informationen 43 angepasste Regelwerk 45 stellt dann quasi einen Filter dar, der wartungsbedingte Ereignisse herausfiltert.

Da dem SIEM-System 37 von dem IAD-System 34 nicht - wie gemäß Figur 1 alle Anomalie-Ereignisse - sondern nur diejenigen, die nicht wartungsbedingt sind, gemeldet und von dem SIEM-System 37 dann zugehörige Alarme ausgegeben werden, werden auch gemäß diesem Ausführungsbeispiel zuverlässig Fehlalarme vermieden.
Bei dem in Figur 2 dargestellten Ausführungsbeispiel, bei dem Abgleich mit den Wartungs-Informationen 43 in dem IAD-System 34 erfolgt, kann das SIEM-System ein konventionelles, aus dem Stand der Technik vorbekanntes SIEM-System 37 sein. Die erfindungsgemäße Vorgehensweise ist also auch in Kombination mit einem bereits vorhandenen SIEM-System 37 möglich. Dabei bedarf es keiner Änderung oder Anpassung des SIEM-Systems 37. Dieses kann vielmehr direkt weiterverwendet werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Überwachung einer industriellen Anlage (2) mit einem Kommunikationsnetzwerk (1), über das zwischen Komponenten (6-8, 10,11, 15, 18-25, 27-31) der Anlage (2) Daten ausgetauscht werden, bei dem
- Daten, die in dem Kommunikationsnetzwerk (1) ausgetauscht werden bereitgestellt und/oder abgegriffen und auf das Bestehen von Anomalien ausgewertet werden,
- Wartungs-Informationen (43) über zukünftige Wartungshandlungen an der Anlage (2) bereitgestellt werden,
- bei dem Erkennen von Anomalien ein Abgleich mit den Wartungs-Informationen (43) erfolgt, wobei zwischen wartungsbedingten und nicht-wartungsbedingten Anomalien unterschieden wird, und
- für nicht wartungs-bedingte Anomalien ein Alarm (41) ausgegeben wird.

2. Verfahren nach Anspruch 1, **dadurch gekennzeichnet, dass** mehrfach Wartungs-Informationen (43) bereitgestellt werden, insbesondere periodisch und/oder jeweils in Reaktion auf eines oder mehrere vorgegebene Ereignisse.

3. Verfahren nach Anspruch 1 oder 2, **dadurch gekennzeichnet, dass** die Wartungs-Informationen (43) über ein Änderungs-Management-System (44) bereitgestellt werden.

4. Verfahren nach einem der vorhergehenden Ansprüche, **dadurch gekennzeichnet, dass** die Wartungs-Informationen (43) in einer Datenbank und/oder einer Datei und/oder in einem webbasierten System bereitgestellt werden.

5. Verfahren nach einem der vorhergehenden Ansprüche, **dadurch gekennzeichnet, dass** die Wartungs-Informationen (43) die Angabe zukünftiger Wartungshandlungen umfassen, die das Kommunikationsnetzwerk (1) und/oder daran teilnehmenden Netzwerckomponenten (6-8, 10,11, 15, 18-25, 27-31) betreffen.

6. Verfahren nach einem der vorhergehenden Ansprüche, **dadurch gekennzeichnet, dass** die Wartungs-Informationen (43) für geplante Wartungshandlungen jeweils einen zugehörigen Kalendertag und insbesondere eine zugehörige Uhrzeit, und/oder Angaben darüber, von welcher oder welchen Personen die jeweilige Wartungshandlung ausgeführt wird, und/oder ein Segment des Kommunikationsnetzwerkes (1), in dem die jeweilige Wartungshandlung erfolgen wird und/oder davon betroffene Komponenten (6-8, 10,11, 15, 18-25, 27-31) liegen, und/oder die Art der jeweiligen Wartungshandlung und/oder Angaben über eine im Rahmen der jeweiligen Wartungshandlung stattfindenden Konfigurationsänderung von einer oder mehreren betroffenen Komponenten (6-8, 10,11, 15, 18-25, 27-31), und/oder Angaben zu einem im Rahmen der jeweiligen Wartungshandlung stattfindenden Softwareupdate, und/oder Angaben zu sich regelmäßig wiederholenden Wartungshandlungen umfassen.

7. Verfahren nach einem der vorhergehenden Ansprüche, **dadurch gekennzeichnet, dass** die Auswertung der Daten auf das Bestehen von Anomalien umfasst, dass die Daten mit vorgegebenen Schwellwerten und/oder Kennlinien verglichen werden und bei einer Abweichung von einem oder mehreren Schwellwerten und/oder von einer oder mehreren Kennlinien wenigstens ein Ereignis erzeugt wird, wobei die Ausgabe von Alarmen (41) bevorzugt von der Erzeugung von Ereignissen abhängt.

8. Verfahren nach Anspruch 7, **dadurch gekennzeichnet, dass** der Abgleich mit den Wartungs-Informationen (43) den Abgleich erzeugter Ereignisse einschließt, wobei insbesondere für das oder die jeweiligen Ereignisse geprüft wird, ob wenigstens eine insbesondere zeitgleich mit dem oder den jeweiligen Ereignissen stattfindende oder stattgefundene Wartungshandlung ein solches Ereignis vorsieht oder vorgesehen hat.

9. Verfahren nach einem der vorhergehenden Ansprüche, **dadurch gekennzeichnet, dass** die Auswertung der Daten auf das Bestehen von Anomalien unter Verwendung eines Regelwerkes (40, 45) erfolgt, und das Regelwerk in Abhängigkeit der Wartungs-Informationen (43) verändert wird.

10. Sicherheits-System (34, 37) für ein industrielles Kommunikationsnetzwerk (1) zur Durchführung des Verfahrens nach einem der vorhergehenden Ansprüche, umfassend
- eine Empfangseinheit (35), die dazu ausgebildet und/oder eingerichtet ist Daten, die in einem industriellen Kommunikationsnetzwerk (1) übertragen werden, abzugreifen oder übergeben zu bekommen, und
- ein Anomalie-Erkennungs-Einheit (36), die dazu ausgebildet und/oder eingerichtet ist, die Daten auf das Bestehen von Anomalien auszuwerten,
wobei das Sicherheits-System (34, 37) dazu ausbildet und/oder eingerichtet ist, Wartungs-Informationen (43) über zukünftige Wartungshandlungen an der Anlage (2) abzugreifen oder übergeben zu bekommen, und für den Fall, dass von der Anomalie-Erkennungs-Einheit (36) eine Anomalie erkannt wurde, einen Abgleich mit den Wartungs-Informationen (43) durchzuführen, und um zwischen wartungsbedingten und nicht-wartungsbedingten Anomalien zu unterscheiden, und um für nicht wartungsbedingte Anomalien einen Alarm (41) auszugeben.

11. Sicherheits-System (34, 37) nach Anspruch 10, **dadurch gekennzeichnet, dass** das System (34, 37) ein IAD-System (34) und/oder ein Sicherheitsinformations- und/oder Ereignis Management System (37) umfasst oder dadurch gebildet wird.

12. Industrielles Kommunikationsnetzwerk (1), das ein Sicherheits-System (34, 37) gemäß einem der Ansprüche 10 oder 11 umfasst oder mit einem solchen verbunden ist, wobei das Sicherheits-System (34, 37) insbesondere mit einem Netzwerkknoten (38) des Kommunikationsnetzwerkes (1), bevorzugt mit einem Spiegel-Port eines solchen, und/oder mit einem Test-Zugriffs-Punkt des Kommunikationsnetzwerkes (1) verbunden ist.

13. Computerprogramm umfassend Programmcode-Mittel zur Durchführung des Verfahrens nach einem der Ansprüche 1 bis 9.

14. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 9 durchzuführen.
